# EUROPEAN PATENT APPLICATION

(11) **EP 4 592 129 A1**
(43) Date of publication of application: **30.07.2025**
(21) Application number: 24219666.5
(22) Date of filing: 13.12.2024
(51) Int. Cl.: B60L 50/50, B60L 50/60, B60L 58/18, B60L 58/19, B60L 58/21, B60L 58/26, H01M 50/249, H01M 10/60

(54) **SYSTEMS AND METHODS FOR CONNECTION OF MODULAR AND SCALABLE BATTERY PACKS**

(30) Priority: 14.12.2023 US 202318540668
(71) Applicant: Paccar Inc, Bellevue, WA 98004 (US)
(72) Inventor: KESSELS, Johannes Theodorus Bernard Anna, 5812 AM Heide (NL); MINGORANCE MURCIA, Remei, 5704 AG Helmond (NL); VAN DE VELDE, Giliam, 2243 Pulle (BE); BOGGIA, Simon, 3116 HT Schiedam (NL); TRANDEM, Samuel Adam, Sammamish, 98074 (US)
(74) Representative: Gevers Patents

(57) **Abstract**

A battery system for a vehicle includes a number of battery packs that are arrangeable in the vehicle in a number of different configurations to optimize vehicle power and range. The system includes a junction box and cables that electrically couple the battery packs to the junction box. The cables extend between successive ones of the battery packs in a daisy chain arrangement. Thus, a common junction box with a maximum number of electrical connections can be utilized in the system with a selected number of batteries to provide a scalable and modular battery system.

## Description

### BACKGROUND

### Technical Field

The present disclosure generally relates to battery packs, such as, for example, modular and scalable battery packs to meet energy requirements of different applications and effectively utilize space and increase energy density.

The present disclosure also generally relates to electrical and fluid connections for modular and scalable battery packs of a battery pack system to reduce wiring length and enable inclusion of a selected number of battery packs with a common electrical or fluid junction box.

### Description of the Related Art

Electric vehicles have seen a rapid increase in popularity in recent years based on environmental concerns associated with internal combustion engines, and other factors. A known electric vehicle includes a battery to power an electric motor that is mechanically coupled to the wheels of the vehicle to generate vehicle movement via electric power provided by the battery pack. Electric vehicle range is limited by the capacity of the battery pack and the capacity of charging stations. This becomes particularly prominent for long-haul commercial vehicles.

Moreover, for vehicles with various wheelbase and packaging space, a variety of battery packs need to be designed due to the limitation of the existing battery form factors. Frequently, the packaging space cannot be utilized effectively, which limits energy density and the resulting range of the vehicles.

Batteries are also known to produce heat during operation, and research has been conducted with respect to cooling batteries in electrical vehicle applications to minimize battery cell capacity fade and impedance growth.

Recently, scalable battery concepts have been researched to accommodate various electric drive ranges dictated by different applications. In such a scalable approach, the end customer typically chooses its preferred battery capacity and associated electric driving range by selecting the number of battery packs in a battery pack system. However, known scalable battery pack designs have a number of disadvantages and deficiencies.

One such drawback is that with current vehicle architectures, many electrical and fluid connections are needed for high voltage wiring for the electrical system and coolant lines for the thermal management system. This leads to an increased level of complexity in the routing of the high voltage and coolant harnesses and lines within the system, as well as increased cost. A high number of high voltage lines is also not attractive for vehicle assembly and service/maintenance because flexible cables consume a substantial amount of time to install and the risk increases that cables are installed in an incorrect way. There are also issues with the design of common components of scalable electrical and thermal management systems, such as junction boxes and fluid pumps, among others. Such common components can be designed with many connectors in order to support connections to a maximum number of battery packs in a given system. If an end customer chooses a system with less than the maximum number of battery packs, caps can be installed on the connectors that are not in use. Such an approach results in common components of the system having a large packaging volume, extra weight, and a higher number of connectors, thereby resulting in increased production costs and, more importantly, operation costs.

Alternatively, the common components can be designed with a few connectors to support connections to the corresponding number of battery packs in a system. In other words, the common components can be designed with a selected number of connectors that corresponds to the attributes of a specific system. Such an approach leads to increased research and development efforts and, due to a smaller sales volume per model, a higher overall unit price.

Accordingly, it would be advantageous to have a modular and scalable battery pack design that overcomes the above deficiencies and drawbacks.

### BRIEF SUMMARY

The present disclosure is generally directed to battery packs and battery systems and is particularly, but not exclusively, directed to battery packs, battery systems, and related battery technology for electric vehicles. The battery packs and related technology described herein may be particularly useful for implementation in commercial vehicles, including long-haul tractors, but the concepts discussed herein are not necessarily limited thereto and may be applied equally to other electric vehicles and electric vehicle batteries and related battery systems, as well as potentially other fields.

Multiple battery packs can be combined in different arrangements to increase electric vehicle range while also being positionable to optimize weight distribution for different vehicles. The battery packs may utilize available space effectively and increase energy density of each pack and the overall battery system. The battery packs may be associated with a centralized heating and cooling system, or distributed heating and cooling systems, or a combined arrangement (e.g., centralized cooling, distributed heating) to further improve thermal performance.

A battery system for vehicles having different vehicle attributes may be summarized as including: a plurality of battery packs arrangeable in vehicles in a plurality of different configurations to optimize vehicle power and vehicle range; a junction box; and a plurality of cables electrically coupled to the plurality of battery packs and to the junction box, wherein the plurality of cables extend between successive ones of the plurality of battery packs in a daisy chain arrangement.

The battery system may further include the plurality of battery packs electrically coupled to each other with respective cables of the plurality of cables. The battery system may further include each of a first subset of the plurality of battery packs being directly electrically coupled only to other battery packs of the plurality of battery packs. The battery system may further include each of a second subset of the plurality of battery packs being directly electrically coupled to the junction box and optionally to a corresponding one of the plurality of battery packs. The battery system may further include a plurality of electrical connectors on the plurality of battery packs. The battery system may further include each of the plurality of electrical connectors having two terminals. The battery system may further include the plurality of electrical connectors located proximate a center of a corresponding battery pack. The battery system may further include the junction box including a maximum of six electrical terminals for electrical communication or electrical coupling with the plurality of cables and the plurality of battery packs. The battery system may further include a number of the plurality of battery packs being modular and scalable relative to the maximum of the six electrical terminals on the junction box. The battery system may further include a first subset of the plurality of battery packs being positioned closest to the junction box relative to a second subset of the plurality of battery packs, and only one pair of cables of the plurality of cables connecting each of the first subset of the battery packs to the junction box. The battery system may further include each of the second subset of the plurality of battery packs being connected to one or more other battery packs by a respective set of cables of the plurality of cables. The battery system may further include each battery pack of the plurality of battery packs further including electrical connectors arranged on opposite external sides of the respective battery pack. The battery system may further include each battery pack of the plurality of battery packs further including at least two electrical connectors arranged on a same side of the respective battery pack. The battery system may further include each battery pack of the plurality of battery packs further including one or more electrical connectors arranged internal to the respective battery pack.

One or more implementations of a battery system may be summarized as including: a plurality of battery packs arrangeable in vehicles in a plurality of different configurations to optimize vehicle power and vehicle range; a junction box including a maximum number of electrical connector terminals to connect a plurality of battery packs; and a plurality of cables electrically coupled to the plurality of battery packs and to the junction box, wherein a number of the plurality of battery packs is modular and scalable relative to the maximum number of electrical connector terminals of the junction box.

The battery system may further include the maximum number of electrical connector terminals being six electrical connector terminals on the junction box. The battery system may further include the plurality of battery packs being electrically coupled to each other via the plurality of cables in a daisy chain arrangement. The battery system may further include at least some of the plurality of battery packs including electrical connectors with at least two terminals. The battery system may further include one or more electrical connectors being positioned external to the battery packs. The battery system may further include one or more electrical connectors being positioned internal to the battery packs. The battery system may further include one or more electrical connectors being positioned proximate a center of a side or a face of the respective at least some of the plurality of battery packs. The battery system may further include a first subset of the plurality of battery packs proximate the junction box being electrically coupled to the junction box with junction box cables of the plurality of cables, and a second subset of the plurality of battery packs spaced further from the junction box than the first subset of the plurality of battery packs being electrically coupled to other battery packs with battery pack cables of the plurality of cables. The battery system may further include a number of the junction box cables being less than a number of the battery pack cables.

One or more implementations of a battery system may be summarized as including: a plurality of battery packs arrangeable in vehicles in a plurality of different configurations to optimize vehicle power and vehicle range; a junction box including electrical connectors having a collective number of terminals; and a plurality of cables electrically coupled to the plurality of battery packs and to the junction box, wherein the collective number of the terminals of the electrical connectors of the junction box is less than a number of the plurality of cables.

The battery system may further include a number of the plurality of battery packs being scalable relative to a same collective number of terminals of the electrical connectors of the junction box. The battery system may further include each of the plurality of battery packs further including at least one electrical connector with two terminals that are selectively engageable with corresponding ones of the plurality of cables. The battery system may further include each of the least one electrical connectors being positioned external or internal to the respective one of the plurality of battery packs. The battery system may further include each of a first subset of the plurality of battery packs being directly electrically coupled only to a corresponding one of the plurality of battery packs by the plurality of cables in a daisy chain arrangement. The battery system may further include each of a second subset of the plurality of battery packs being directly electrically coupled to a corresponding one of the plurality of battery packs and the junction box by the plurality of cables.

One or more implementations of a battery system may be summarized as including a plurality of battery packs electrically coupled to each other and/or a junction box in a daisy chain arrangement.

One or more implementations of a battery system may be summarized as including a plurality of battery packs and a plurality of heat transfer medium conduits coupled to the battery packs and/or a thermal management system in a daisy chain arrangement.

One or more implementations of a battery system may be summarized as including a plurality of battery packs including dual terminal electrical connectors to enable a daisy chain arrangement of the plurality of battery packs that is modular and scalable relative to a constant number of electrical contacts on a junction box.

The disclosure also contemplates corresponding methods according to any of the above.

Other features and advantages of the techniques of the disclosure are provided below.

### BRIEF DESCRIPTION OF THE SEVERAL VIEWS OF THE DRAWINGS

Figure 1 is a schematic plan view of a known battery system to provide context regarding the benefits and advantages of the techniques of the present disclosure.
Figure 2A and Figure 2B are schematic plan views of implementations of a modular and scalable battery system according to the present disclosure.
Figure 3 is a schematic plan view of another implementation of a modular and scalable battery system according to the present disclosure.
Figure 4 is a schematic plan view and a perspective view of an electrical connector of the implementations of the modular and scalable battery system according to the present disclosure.

### DETAILED DESCRIPTION

In the following description, certain specific details are set forth in order to provide a thorough understanding of various disclosed implementations. However, implementations may be practiced without one or more of these specific details, or with other methods, components, materials, etc. In other instances, well-known structures associated with battery technology have not been shown or described in detail to avoid unnecessarily obscuring descriptions of the implementations.

The present disclosure will proceed to describe certain non-limiting techniques with reference to battery packs, cables, junction boxes, and other components of a battery system that is particularly advantageous for electric vehicles. It is to be appreciated that the concepts and techniques discussed with reference to the electrical aspects of the battery system can be applied equally to a thermal management system of the battery system and/or electric vehicle. As an example, the thermal management system can benefit from the techniques of the present disclosure with respect to at least fluid lines, pumps, fluid connectors, and other like aspects, even if not expressly provided herein. Thus, the concepts of the disclosure are not limited solely to electrical aspects of a battery system.

Unless the context clearly dictates otherwise, the word "common," when used in conjunction with a component of an electrical or thermal management system, refers to a component of the respective electrical or thermal management system that is implemented in the system regardless of the number of variable features, such as battery packs, in the system. In other words, "common" refers to components of the system that are constant in number or characteristics relative to variable features of the battery systems described herein. As an example, a "common junction box" refers to a junction box that is implemented in the battery system irrespective of a selected number of battery packs in the battery systems described herein and that is generally capable of being implemented with any selected number of battery packs.

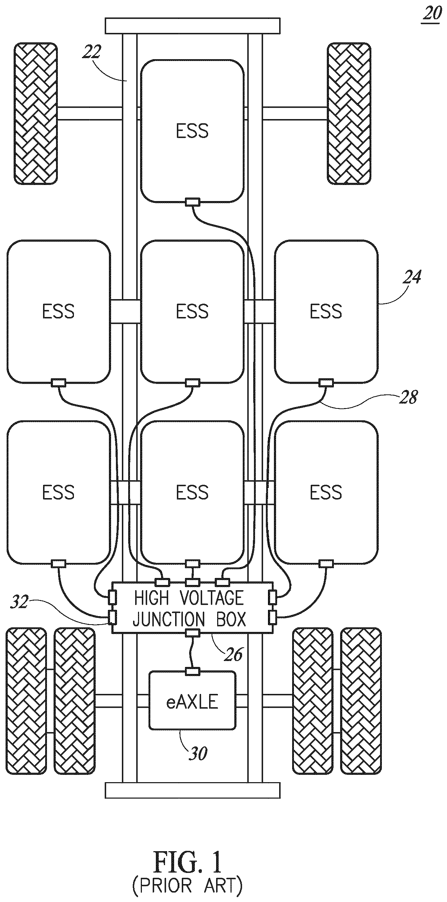

Figure 1 is a schematic plan view of a known battery system 20 of a vehicle 22 to provide context regarding the benefits and advantages of the techniques of the present disclosure. Known system 20 includes electrical energy storage systems ("ESS") 24 that are electrically coupled to a junction box 26 with cables 28. The junction box 26 is in communication and/or electrically coupled with an axle 30. The axle 30 generates movement of the vehicle 22 via electric power provided by the electrical energy storage systems 24 and the junction box 26.

As referenced above, a scalable battery system is preferred for commercial vehicles to accommodate various electric drive ranges dictated by specific applications. With such a scalable system, an end customer typically chooses its preferred battery capacity and associated electric driving range. A scalable battery concept is typically implemented by installing more or less individual electrical energy storage systems 24 on to the vehicle 22, such that the total installed energy storage capacity satisfies the customer needs. Thus, the known system 20 may be an example of a scalable battery system where a number of the electrical energy storage systems 24 can be varied in the overall system 20 to change the capacity of the system 20 and associated electric driving range of the vehicle 22.

A disadvantage of the system 20 and other like approaches is that, under current vehicle architectures, many connections are needed for the wiring, which may be high voltage cables. There are similar issues for the fluid lines and other aspects of the thermal management system. This leads to an increased level of complexity in the routing of the cables, wiring harnesses, and coolant lines, for example. This complexity complicates the assembly of the vehicle 22 and ultimately results in additional costs. Figure 1 provides an example of the challenges with such known systems 20. All of the high voltage connections, represented by cables 28, come together at the junction box 26. In Figure 1, the separate positive and negative cables 28 are grouped together and shown as a single cable 28 for simplicity. In practice, it is common to use individual cables for the positive and negative cables 28, such that the number of cables 28 is twice as many as illustrated in Figure 1. Thus, for the illustrated example in Figure 1 where the system 20 includes seven electrical energy storage systems 24, there may be fourteen individual cables 28 only for electrically connecting the electrical energy storage systems 24 to the junction box 26. These cables 28 are in addition to coolant lines, as well as cables 28 connecting the junction box 26 to the axle 30, and other connections, cables, wires, and the like in the system 20.

The junction box 26 of a typical system 20 includes a number of connections 32 or connectors 32 that scales linear with to the number of cables 28 associated with the number of electrical energy storage systems 24. Each of the connectors 32 may be a single connector 32, meaning that each connector 32 is structured to receive only one cable 28. Thus, in the illustrated example, the junction box 26 may include fourteen connectors 32 for the cables 28 associated with the electrical energy storage systems 24 and at least two more connectors 32 for the connection to the axle 30. Additional connections for the thermal management system and fluid lines are not shown. In some cases, the junction box 26 may have a number of connections 32 that supports a maximum number of electrical energy storage systems 24 in the system 20. For example, if the system 20 has a maximum of seven electrical energy storage systems 24, then the junction box 26 may include 14 connections 32 for the cables 28 associated with this maximum number of electrical energy storage systems 24. In the event that one or more of the electrical energy storage systems 24 are removed from the system 20 or not requested by an end customer for inclusion in the system 20, caps may be applied to the connections 32 that are not in use in the system 20. As noted above, this approach results in a large packaging volume for the junction box 26, extra weight, and additional connectors 32, thereby resulting in extra costs of production and, more importantly, of operation.

Alternatively, the system 20 may include a junction box 26 with different numbers of connections 32 that correspond to the intended number of electrical energy storage systems 24 in the system 20. For example, the junction box 26 may be provided in different models with different numbers of connections 32, such as six connections 32 for three electrical energy storage systems 24, ten connections 32 for five electrical energy storage systems 24, or fourteen connections 32 for seven electrical energy storage systems 24, among others. Such an approach of using different variants of the junction box 26 creates extra research and development effort, which increases cost and complexity, and, due to smaller volumes per model of junction box 26, unit prices will increase. Thus, there remains a need for a modular and scalable battery system that overcomes the above deficiencies and drawbacks.

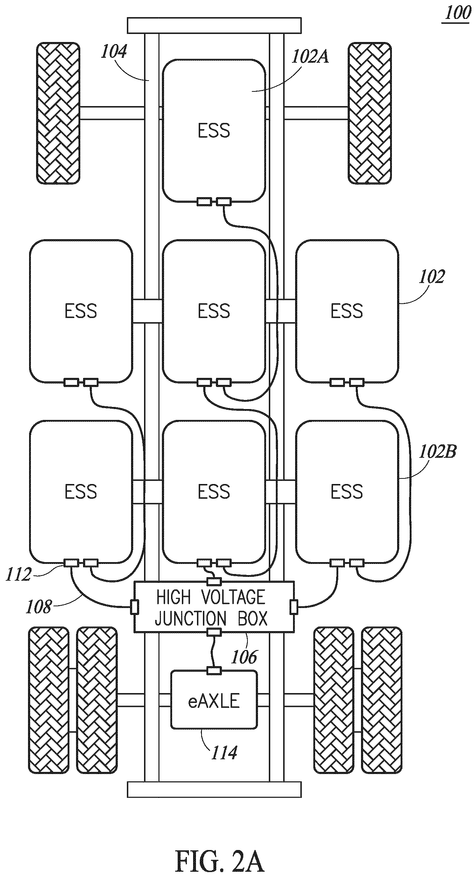

Figure 2A is a schematic plan view of an implementation of a modular and scalable battery system 100. The battery system 100 includes a plurality of battery packs 102 (which may also be referred to herein as batteries 102 or electrical energy storage systems) that may be arrangeable in a vehicle, such as a commercial vehicle, in any number of different configurations to optimize vehicle power and vehicle range. Thus, while Figure 2A provides one non-limiting example of a layout of the battery packs 102, the location and arrangement of the battery packs 102 in the system 100 may generally be selected according to design factors. The battery system 100 is mountable to a structural frame 104 of the vehicle, which may be a chassis or some other like support. Although not shown, brackets and other like fasteners or connectors may be utilized to couple the batteries 102 to the structural frame 104 using a variety of different techniques. The batteries 102 may each have the same or different characteristics with respect to at least size, shape, energy density, and the like. In some implementations, the system 100 includes the batteries 102 each being substantially identical such that the system 100 is modular and scalable based on the number of batteries 102 that are selected for inclusion in the system 100. In such implementations, the battery packs 102 can generally be mounted on the left side, right side, and in the midship area of the structural frame 104 instead of developing a different battery pack 102 for each location. Thus, the energy density and the corresponding driving range of the vehicle may be likewise customizable and scalable for different applications based on the number of battery packs 102 in the system 100.

The battery packs 102 are electrically coupled to a common junction box 106 by wires or cables 108. The common junction box 106 may be a high voltage junction box suitable for interaction with the battery packs 102 and the wires or cables 108 may likewise be high voltage wires or cables 108. Further, the common junction box 106 is preferably located at a back of the vehicle or commercial vehicle (i.e., at the bottom of the structural frame 104 in the orientation of Figure 2A). Such an arrangement is not typical in the art but is contemplated herein to enable a minimum length of the wires or cables 108 in the overall system 100. While Figure 1 is designated as "prior art" and includes the junction box 26 at the back of the vehicle 22, the inclusion of junction box 26 at this location is a concept of the disclosure and is provided in Figure 1 only to illustrate differences and advantages of the techniques of the disclosure relative to a traditional system 20.

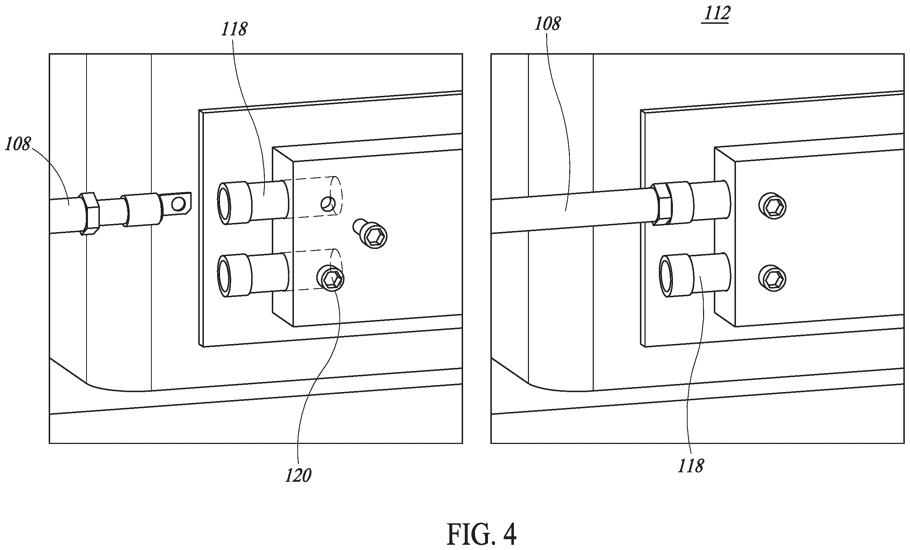

As explained further herein, each of the battery packs 102 includes at least one electrical connector 112. The electrical connectors 112 on the battery packs 102 are so-called "double connectors" meaning that they include two terminals to enable two separate electrical connections with separate cables 108. In an implementation, each electrical connector 112 includes a positive terminal and a negative terminal to facilitate electrical connections with corresponding positive cable and negative cable, respectively. The terminals of the connectors 112 are represented in Figure 2A with boxes for simplicity with a non-limiting implementation of the terminals best shown in Figure 4. In an implementation, each connector 112 includes two terminals. Thus, the two boxes for the connectors 112 on each battery pack 102 correspond to four possible connections with cables 108. As with Figure 1, the cables 108 are illustrated as a single line for clarity but may include two cables 108 per line (i.e., positive and negative cables 108) in practice. The connectors 112 may be located proximate a center of the corresponding battery pack 102 to enable implementation of only a single variant of the battery pack 102 instead of developing different variants of the battery pack 102 for each location on the structural frame 104, as above. The connectors 112 may be located, in some implementations, on a same or opposite external sides or surfaces of the respective battery pack 102. In Figure 2A, the connectors 112 are centered on a same side of the respective battery pack 102, although other configurations are contemplated herein.

Because the connectors 112 are double connectors, the battery packs 102 can be electrically coupled to each other and/or to the common junction box 106 in a daisy chain arrangement. The phrase "daisy chain" generally refs to a wiring scheme where devices are electrically connected together in sequence (i.e., in series). As shown in Figure 2A, first ones 102A of the battery packs 102 are directly electrically coupled in series to only a single corresponding battery pack 102. Second ones 102B of the battery packs 102 are directly electrically coupled in series to a corresponding one of the battery packs 102 and directly electrically coupled to the common junction box 106. Thus, only a single cable 108, or a single pair of cables 108 (i.e., positive and negative cables 108) may electrically connect the first ones 102A of the battery packs 102 to the other battery packs 102 and/or the common junction box 106 and two cables 108 or two pairs of cables 108 may electrically connect the second ones 102B of the battery packs 102 to the other battery packs 102 and/or the common junction box 106.

In some implementations, the cable 108 or cables 108 may have characteristics, such as cross-sectional thickness or cross-sectional diameter (or gauge) that are optimized based on a location of the cable(s) 108 in the system 100. For example, higher amperage may flow through the cable(s) 108 closest to the common junction box 106, resulting in larger cross-section (or lower gauge) cable(s) 108 proximate to the common junction box 106. Cable(s) 108 that are further from the common junction box 106 (i.e., further upstream in the daisy chain relative to the position of the common junction box 106) may have a smaller cross section (higher gauge) to reduce costs. In some non-limiting examples, each cable 108 between successive battery packs 102 has a gauge that is different from the other cable(s) 108 based on the location of each cable 108. In other words, the cable(s) 108 may have a cascading gauge size from high gauge and small cross-sectional size furthest from the junction box 106 and increasing in size (lower gauge) with each battery pack 102 successively closer to the common junction box 106 in the system 100.

In an implementation, the first ones 102A of the battery packs 102 are generally located further from the junction box 106 than the second ones 102B of the battery packs 102. In some aspects, the second ones 102B of the battery packs 102 may be located closest to the common junction box 106 relative to the other battery packs 102. Although not shown, a similar daisy chain technique can be utilized with heat transfer medium conduits (e.g., coolant lines) and other aspects of the thermal management system of the system 100. Thus, in Figure 2A, the cables 108 extend from battery pack 102 to battery pack 102 with only certain ones, such as second ones 102B, of the battery packs 102 directly electrically connected to the common junction box 106.

Such an arrangement of system 100 differs significantly from the arrangement of typical system 20 shown in Figure 1 where each electrical energy storage system 24 is directly electrically coupled to the junction box 26. The arrangement of the system 100 enables the common junction box 106 to support a maximum of three connections or three connectors 112 (i.e., six terminals) while being electrically coupled to a selected number of battery packs 102. In other words, the number of battery packs 102 may greatly exceed the maximum number of electrical connections on the common junction box 106 according to the techniques of the disclosure. By comparison, the system 20 in Figure 1 may include seven electrical energy storage systems 24 and the system 100 in Figure 2A may include seven battery packs 102. As noted above, the system 20 includes fourteen cables 28 that electrically connect the electrical energy storage systems 24 individually to the junction box 26. Thus, the junction box 26 must support fourteen electrical connections and would typically include fourteen individual electrical connectors and/or terminals for this purpose. In contrast, the system 100 may include the same number of battery packs 102, but with only three double connectors 112 on the junction box (i.e., six total connections or terminals). In this way, the system 100 enables only a single variant of a junction box 106 to be implemented regardless of the number and arrangement of the battery packs 106 to provide modularity and scalability of the system 100 with reduced unit prices for the common junction box 106 and other components. Further, the location of the connectors 112 on the battery packs 102 reduces cable length, which reduces overall cost, and the daisy chain arrangement reduces system complexity.

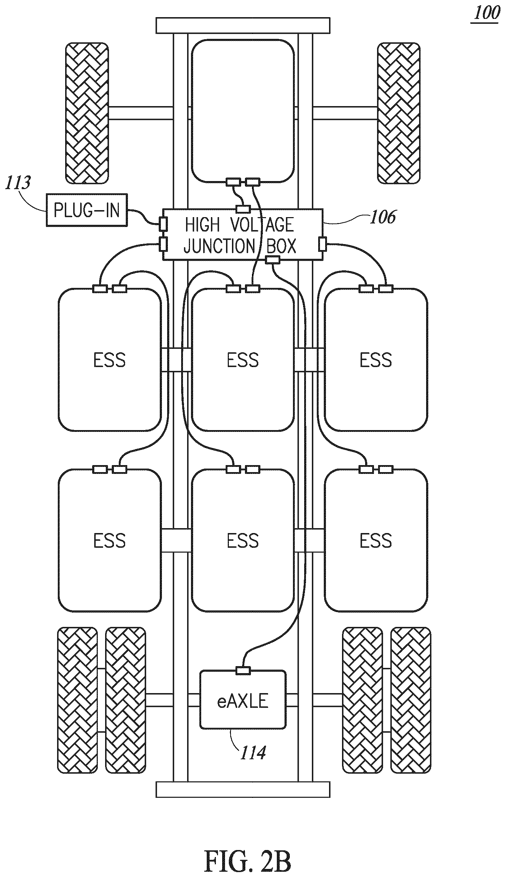

Figure 2B is a schematic plan view of a further implementation of the modular and scalable battery system 100. In Figure 2A, the common junction box 106 is located at the rear of the system 100 (i.e., at the rear of a vehicle carrying the system 100 or on which the system 100 is installed). While there are advantages to this approach, such as reducing the wiring length between the junction box 106 and an axle 114, there are potential disadvantages as well. For example, a charging socket for plug-in charging of the vehicle carrying the system 100 may be located toward a front of the vehicle and in electrical communication with the junction box 106 via cables, wires, and the like. Because the socket is in the front of the vehicle and, in Figure 2A, the junction box 106 is at the rear of the system 100 and/or vehicle, there is an increased wiring length between the socket and the junction box 106. It is also noted that some prior vehicle designs include junction boxes 106 that are generally located somewhere in a front area or front portion of a vehicle and relocating the junction box 106 to the rear of the vehicle may result in changes in the overall vehicle design and manufacturing process, which can increase initial costs.

Accordingly, Figure 2B illustrates one or more implementations of the system 100 where the common junction box 106 is located in the front of the system 100 and/or vehicle. In Figure 2B, the system 100 further includes a plug-in socket 113 in electrical communication and/or electrically coupled to the common junction box 106 with wires, cables, and the like discussed herein. Because the plug-in socket 113 is located at the front of the system 100 along with the junction box 106, the wiring length between the plug-in socket 113 is reduced. As a result, the wiring length between the common junction box 106 and the axle 114 may be increased, which is a possible disadvantage of this approach. However, the location of the common junction box 106 and plug-in socket 113 at the front of the system 100 may result in manufacturing and/or design efficiencies that outweigh the increase in wiring length between the junction box 106 and axle 114. The other aspects of the system 100 may generally be similar and/or function similarly to those discussed above with respect to Figure 2A, except with the junction box 106 at the front of the system 100.

In view of the above, Figure 2B is primarily provided to demonstrate that the location of the junction box 106 within the system 100 and relative to the battery packs 102 may generally be selected. In various implementations, the junction box 106 may be at the back or the front of the system 100 as in Figure 2A and Figure 2B, respectively, or the junction box 106 may be in the middle of the system, meaning surrounded by battery packs 102 instead of being upstream or downstream of the battery packs 102, or any other selected arrangement. Changing the position of the junction box 106 may influence wiring length for various connections, such as between the plug-in charging socket 113 and the junction box 106 and between the junction box 106 and the axle 114, while also potentially impacting design and manufacturing costs. These and other factors may be optimized to generate preferred locations for the junction box 106 while implementing the techniques discussed herein.

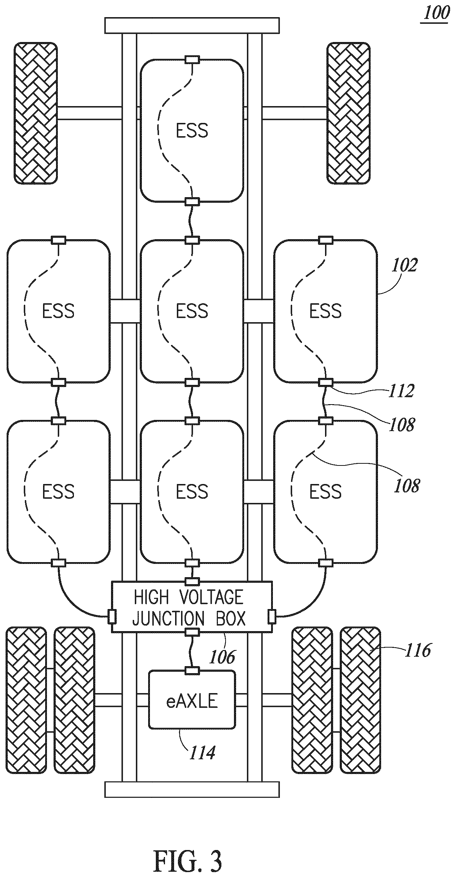

Figure 3 is a schematic plan view of the modular and scalable battery system 100. Figure 3 is provided to illustrate an implementation of the system 100 where the connectors 112 are internal to the battery packs 102. The connectors 112 may be internal to the battery packs 102 and interface with an exterior surface of the battery packs 102 to facilitate connection to cables 108. Further, at least some of, or some portion of, the cables 108 may be internal to the battery packs 102 to further reduce external cable length relative to the arrangement of Figure 2A and Figure 2B. Specifically, the system 100 may include connectors 112 arranged on opposite sides or end faces of the battery packs 102 and cables 108 that are internal to a respective pack 102 and electrically connect the connectors 112. Not only does this arrangement reduce a length of the cables 108 by passing at least a portion of the cables 108 directly through the packs 102 instead of around the battery packs 102, but the packs 102 can be pre-manufactured and assembled units with internal cables 108 in place at the time of installation in the system 100. Thus, only external cables 108 (i.e., between packs 102 or between packs 102 and the common junction box 106) are installed to complete the system 100. This further reduces complexity in the system 100, minimizes the length of cables 108 utilized for installation and reduces the assembly time of vehicles produced in series production.

In some implementations, the cables 108 which are internal to the battery packs 102 may be implemented by means of rigid or flexible busbar connections and potentially omitting insulation. This further reduces cost, volume and weight.

Figure 3 also illustrates that the common junction box 106 is electrically connected to the axle 114 by the cables 108. As noted, the junction box 106 is positioned at the rear of the structural frame 104 (Figure 2A) and closer to the axle 114 than any of the battery packs 102 are to the axle 114 to reduce wiring length in some implementations. The common junction box 106 distributes electricity and/or power from the battery packs 102 to the axle 114. The axle 114 rotates wheels 116 coupled to the axle 114 to produce movement of the vehicle.

Figure 4 is a perspective view (left and right image) of the electrical connectors 112 of the system 100 described above with reference to Figure 2A and Figure 2B. For the system 100 described with reference to Figure 3, one terminal of the electrical connectors 112 is outside the battery pack 102 and the other terminal is inside the battery pack 102 to enable to cables to traverse through or internal to the battery packs 102, as described above. The electrical connectors 112 shown in Figure 4 are preferably associated with at least the battery packs 102, but may also be utilized with the common junction box 106, axle 114, and other electrical components of the system 100. Each of the electrical connectors 112 includes two terminals 118 for the cables 108, where the terminals 118 may also be referred to as entries 118 to install the cables 108. The terminals 118 are electrically coupled to each other when an electrical contact (not shown), such as a bolt, is fixed in ring terminals 120. Specifically, the cables 108 may terminate in a cable terminal that is received in the terminals 118 of the electrical connectors 112 proximate the ring terminals 120. An electrical contact, such as a bolt, is inserted through the cable terminal and received in the ring terminal 120 of the electrical connector 112 to electrically couple the cable 108 to the electrical connector 112. When both electrical contacts are installed in both ring terminals 120 of the respective connector 112, the ring terminals 120 and cables 108 connected to the terminals 120 are in electrical communication with each other. When one or more of the terminals 118 of the connectors 112 are not in use, a cap can be installed in the vacant terminal 118 to prevent water or debris ingress.

Thus, instead of using two distinct and separate connectors on each battery pack, it is contemplated herein to use connectors 112 that facilitate connection with, and contain two separate cables 108. An example of such a connector is depicted in Figure 4, although other configurations are contemplated herein. Each connector 112 holds two entries 118 to install the cables 108, which are electrically connected with each other when bolts are fixed in the ring terminals 120. For purposes of illustration, one cable is shown (at left) disconnected from one of the connectors 112 and one cable is shown (at right) fully connected to another one of the connectors 112 with a cable gland installed. In instances, where a connector 112 may be unoccupied by one or more cables 108, a protective cap (not shown) may be installed in the vacant entry 118 to prevent water or debris ingress.

Although aspects of the various implementations have been described in the context of battery packs for commercial vehicles, such as long-haul tractors, it is appreciated that aspects of the implementations of the battery packs and battery pack technology described herein, may be applicable to other applications, including personal or passenger vehicles and heavy duty industrial equipment.

Moreover, features and aspects of the various implementations described above can be combined to provide further implementations. These and other changes can be made to the implementations in light of the above-detailed description. In general, in the following claims, the terms used should not be construed to limit the claims to the specific implementations disclosed in the specification and the claims, but should be construed to include all possible implementations along with the full scope of equivalents to which such claims are entitled.

## Claims

1. A battery system for vehicles having different vehicle attributes, the battery pack system comprising:
a plurality of battery packs arrangeable in a vehicle in a plurality of different configurations to optimize vehicle power and vehicle range;
a junction box; and
a plurality of cables electrically coupled to the plurality of battery packs and to the junction box, wherein the plurality of cables extend between successive ones of the plurality of battery packs in a daisy chain arrangement.

2. The battery system of claim 1, wherein each of a subset of the plurality of battery packs are directly electrically coupled only to other battery packs of the plurality of battery packs.

3. The battery system of claim 1, wherein each of a subset of the plurality of battery packs are directly electrically coupled to the junction box and optionally to a corresponding one of the plurality of battery packs.

4. The battery system of claim 1, wherein the junction box includes a maximum of six terminals for electrical communication with the plurality of cables and the plurality of battery packs, and
wherein a number of the plurality of battery packs is modular and scalable relative to the maximum of the six terminals on the junction box.

5. The battery system of claim 1, wherein a first subgroup of the plurality of battery packs are positioned closest to the junction box relative a second subgroup of the plurality of battery packs, and
wherein only one respective set of cables of the plurality of cables connects each battery pack of the first subgroup to the junction box.

6. The battery system of claim 1, wherein each battery pack of the plurality of battery packs further includes at least one respective electrical connector arranged on opposite external sides of the battery pack, or wherein each battery pack of the plurality of battery packs further includes at least two electrical connectors arranged on a same side of the battery pack.

7. The battery system of claim 1, wherein each battery pack of the plurality of battery packs further includes electrical connectors arranged internal to the battery pack to facilitate routing of cables or busbars, or both, internal to the battery pack.

8. A battery system, comprising:
a plurality of battery packs arrangeable in vehicles in a plurality of different configurations to optimize vehicle power and vehicle range;
a junction box including a maximum number of electrical connector terminals; and
a plurality of cables electrically coupled to the plurality of battery packs and to the junction box, wherein a number of the plurality of battery packs is modular and scalable relative to the maximum number of electrical connector terminals of the junction box.

9. The battery system of claim 8, wherein the maximum number of electrical connector terminals of the junction box to couple battery packs is six to support connection of up to only three sets of cables.

10. The battery system of claim 8, wherein the plurality of battery packs are electrically coupled to each other via the plurality of cables in a daisy chain arrangement.

11. The battery system of claim 8, wherein each of a first subset of the plurality of battery packs located proximate the junction box are electrically coupled to the junction box with a respective set of junction box cables of the plurality of cables, and
wherein each of a second subset of the plurality of battery packs spaced further from the junction box than the first subset of the plurality of battery packs is electrically coupled to other battery packs with a respective set of battery pack cables of the plurality of cables.

12. A battery system, comprising:
a plurality of battery packs arrangeable in vehicles in a plurality of different configurations to optimize vehicle power and vehicle range;
a junction box including electrical connectors having a collective number of terminals; and
a plurality of cables electrically coupled to the plurality of battery packs and to the junction box,
wherein the collective number of the terminals of the electrical connectors of the junction box is less than a number of the plurality of cables electrically coupled to the plurality of battery packs to allow the junction box to connect to external components.

13. The battery system of claim 12, wherein a number of the plurality of battery packs is scalable relative to the collective number of terminals of the electrical connectors of the junction box.

14. The battery system of claim 12, wherein each of a subset of the plurality of battery packs are each directly electrically coupled only to one or more other battery packs of the plurality of battery packs by the plurality of cables in a daisy chain arrangement.

15. The battery system of claim 12, wherein each of a subset of the plurality of battery packs are directly electrically coupled to the junction box by the plurality of cables and potentially one adjacent battery pack of the plurality of battery packs.
